# FASCICULE DE BREVET EUROPEEN

(11) **EP 1 760 736 B1**
(45) Date de publication et mention de la délivrance du brevet: **30.07.2008**
(21) Numéro de dépôt: 06119891.7
(22) Date de dépôt: 31.08.2006
(51) Int. Cl.: H01G 5/16, H05K 3/00

(54) **Procédé de formation d'un condensateur variable**
Verfahren zur Herstellung variabler Kondensatoren
Process of forming variable capacitor

(30) Priorité: 31.08.2005 FR 0552645
(43) Date de publication de la demande: 07.03.2007
(73) Titulaire: STMICROELECTRONICS SA, 92120 Montrouge (FR)
(72) Inventeur: Bouche, Guillaume, Portland, OR 97214 (US); Casset, Fabrice, 38570 Tencin (FR); Ancey, Pascal, 38420 Revel (FR)
(74) Mandataire: de Beaumont, Michel

(56) Documents cités:
- EP-A- 1 536 439
- US-B1- 6 392 233
- US-B1- 6 499 217

## Description

### Domaine de l'invention

La présente invention concerne un procédé de formation d'un condensateur variable et plus particulièrement d'un condensateur variable tel que celui décrit dans la demande de brevet français N° 0350911 de la demanderesse.

### Exposé de l'art antérieur

Le condensateur variable décrit dans la demande de brevet susmentionnée comprend une couche conductrice recouvrant l'intérieur d'une cavité formée en surface d'un substrat et une membrane souple conductrice placée au-dessus de la cavité. Selon un aspect de ce condensateur variable, la partie de la cavité recouverte par la couche conductrice a une forme de sillon telle que sa profondeur augmente continûment en allant d'un des bords du sillon vers le fond du sillon. De plus, la couche conductrice recouvre l'intérieur de cette portion de sillon au moins jusqu'à l'un de ses deux bords qu'elle recouvre éventuellement.

Comme cela est décrit dans la demande de brevet susmentionnée, le procédé de formation d'un tel condensateur variable consiste à former dans un substrat une cavité ayant en partie la forme d'un sillon, à recouvrir l'intérieur du sillon d'une première couche conductrice, à remplir la cavité d'une portion sacrificielle, à former sur la portion sacrificielle une bande conductrice en forme de pont s'appuyant sur les bords latéraux du sillon, et enfin à éliminer la portion sacrificielle. La bande conductrice constitue une membrane conductrice souple pouvant se déformer afin de se rapprocher ou de s'éloigner de la couche conductrice recouvrant l'intérieur de la cavité.

La formation dans un substrat d'une cavité ayant au moins en partie la forme d'un sillon peut être effectuée de diverses façons telles que décrites dans la demande de brevet français susmentionnée. Excepté le procédé de formation d'une cavité au moyen d'espaceurs isolants, les autres procédés de fabrication d'une cavité décrits sont relativement complexes à mettre en oeuvre et nécessitent un grand nombre d'opérations (Cf. par exemple document EP-A-1 536 439). De plus, chacun de ces procédés permet d'obtenir une cavité présentant en coupe une forme de sillon présentant un profil bien déterminé sans qu'il soit possible d'obtenir un profil "idéal". En outre, les formes des cavités obtenues selon ces procédés ne sont pas homogènes et dépendent entre autres de la densité de cavités formées sur le substrat.

### Résumé de l'invention

Un objet de la présente invention est de prévoir un procédé de fabrication d'un condensateur variable comprenant une couche conductrice placée dans une cavité présentant une forme souhaitée.

Un autre objet de la présente invention est de prévoir un tel procédé qui soit simple à mettre en oeuvre.

La présente invention prévoit un procédé de formation d'un condensateur variable comprenant une bande conductrice recouvrant l'intérieur d'une cavité, et une membrane souple conductrice placée au-dessus de la cavité, la cavité étant réalisée selon les étapes suivantes : former un évidement dans un substrat ; placer un matériau malléable dans l'évidement ; mettre un poinçon en appui sur le substrat au niveau de l'évidement afin de conférer à la partie supérieure du matériau malléable une forme désirée ; durcir le matériau malléable ; et retirer le poinçon.

Selon un mode de mise en oeuvre du procédé de formation d'un condensateur variable décrit ci-dessus, l'étape de durcissement comprend une étape de chauffage.

Selon un mode de mise en oeuvre du procédé de formation d'un condensateur variable décrit ci-dessus, le matériau malléable est de la résine non réticulée.

Selon un mode de mise en oeuvre du procédé de formation d'un condensateur variable décrit ci-dessus, le poinçon est obtenu selon le procédé suivant : former une cavité de forme désirée dans la partie supérieure d'un substrat ; déposer sur le substrat un matériau durcissable ; et séparer le substrat et le matériau durcissable, ce dernier constituant alors un poinçon.

Selon un mode de mise en oeuvre du procédé de formation d'un condensateur variable décrit ci-dessus, une partie au moins de la cavité a la forme d'un sillon, les parties supérieures de substrat situées à proximité du sillon constituant deux bords, et la profondeur du sillon augmentant continûment en allant d'un des bords vers le centre du sillon.

Selon un mode de mise en oeuvre du procédé de formation d'un condensateur variable susmentionné, le procédé comprend en outre les étapes suivantes : former une première bande conductrice recouvrant l'intérieur de la partie de la cavité en forme de sillon, la première bande conductrice s'étendant au moins jusqu'à l'un des deux bords du sillon qu'elle recouvre éventuellement ; former une portion sacrificielle dans la cavité ; former une bande isolante sur la portion sacrificielle, sensiblement au-dessus de la première bande conductrice ; former une seconde bande conductrice sur la bande isolante ; et éliminer la portion sacrificielle.

Selon un mode de mise en oeuvre du procédé de formation d'un condensateur variable susmentionné, le procédé comprend en outre, préalablement à la formation de la cavité, la formation de deux pistes conductrices dans la partie supérieure du substrat, ledit évidement étant placé entre les deux pistes conductrices, et la première bande conductrice s'étendant sur le substrat jusqu'à recouvrir l'une des pistes conductrices, et la seconde bande conductrice s'étendant sur le substrat au-delà de la bande isolante jusqu'à recouvrir l'autre des pistes conductrices.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1A à 1I sont des vues en coupe et la figure 1J une vue en perspective de structures obtenues lors d'étapes successives d'un procédé de fabrication d'un condensateur variable selon la présente invention ;
les figures 2A à 2C sont des vues en coupe de structures obtenues lors de la fabrication d'un poinçon utilisé dans un procédé de fabrication d'un condensateur variable selon la présente invention.

### Description détaillée

Par souci de clarté, de mêmes éléments ont été désignés par de mêmes références aux différentes figures et, de plus, comme cela est habituel dans la représentation des circuits intégrés, les diverses figures ne sont pas tracées à l'échelle.

Le procédé de fabrication d'un condensateur variable selon la présente invention comprend une étape de formation d'une cavité selon un procédé de nanoimpression utilisant un poinçon préalablement fabriqué. Ce procédé de nanoimpression consiste à remplir un évidement d'un substrat avec un matériau malléable, puis à placer sur le substrat un poinçon au niveau de l'évidement et enfin à durcir le matériau malléable afin d'en fixer la forme. Le matériau ainsi durci comprend dans sa partie supérieure une cavité présentant une forme prédéfinie correspondant à celle du poinçon.

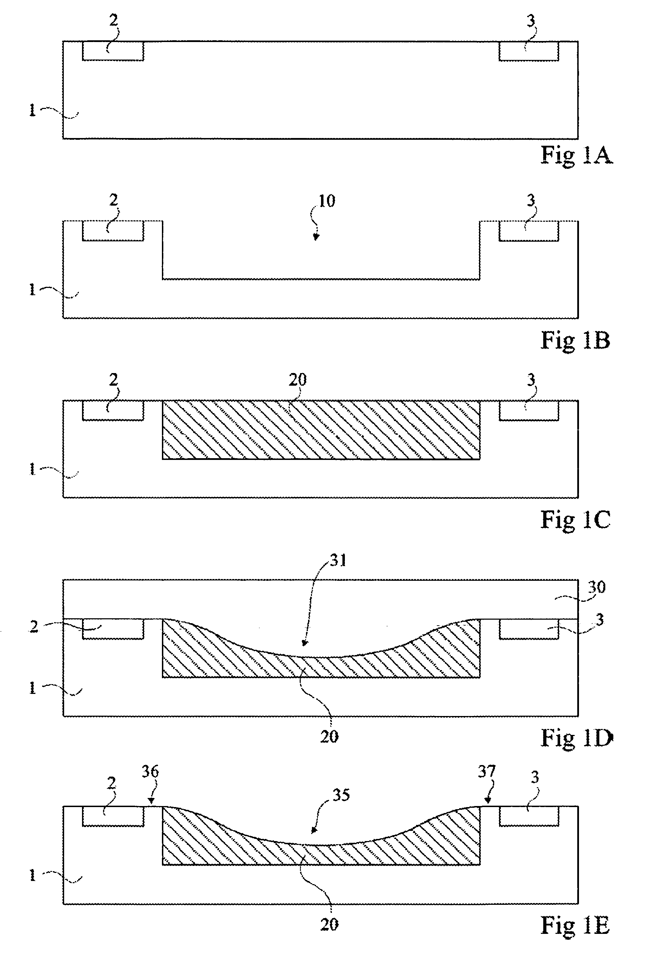

Un exemple de procédé de fabrication d'un condensateur variable selon la présente invention est décrit ci-après en relation avec les figures 1A à 1J.

Dans une étape initiale, illustrée en figure 1A, on forme, dans un substrat isolant 1, des pistes conductrices 2 et 3 dans des ouvertures de la partie supérieure du substrat 1.

A l'étape suivante, illustrée en figure 1B, on grave le substrat 1 pour former un évidement 10 dans la partie supérieure du substrat 1 entre les pistes conductrices 2 et 3. L'évidement 10 est dans cet exemple réalisé selon un procédé de gravure anisotrope de sorte que les parois de l'évidement sont sensiblement verticales. Cependant, l'évidement 10 pourrait être formé selon un procédé de gravure isotrope.

A l'étape suivante, illustrée en figure 1C, on place dans l'évidement 10 un matériau malléable 20 pouvant être durci ultérieurement. Un tel matériau malléable est par exemple de la résine non réticulée.

A l'étape suivante, illustrée en figure 1D, on place un poinçon 30 sur le substrat 1 au niveau de l'évidement 10. Le poinçon 30 est dans cet exemple une portion de plaque présentant une excroissance bombée 31 s'imbriquant dans l'évidement 10. On place alors l'ensemble de cette structure dans une enceinte chauffante de façon à durcir le matériau 20. Une fois le matériau 20 durci, le poinçon 30 est retiré.

Comme cela est visible en figure 1E, une partie du matériau 20 durci a alors en coupe la forme d'un sillon 35. Les parties supérieures du substrat situées entre les pistes conductrices 2, 3 et le sillon 35 constituent deux bords latéraux 36 et 37. On notera que la profondeur du sillon 35 augmente continûment en allant d'un des bords 36, 37 vers le centre du sillon 35.

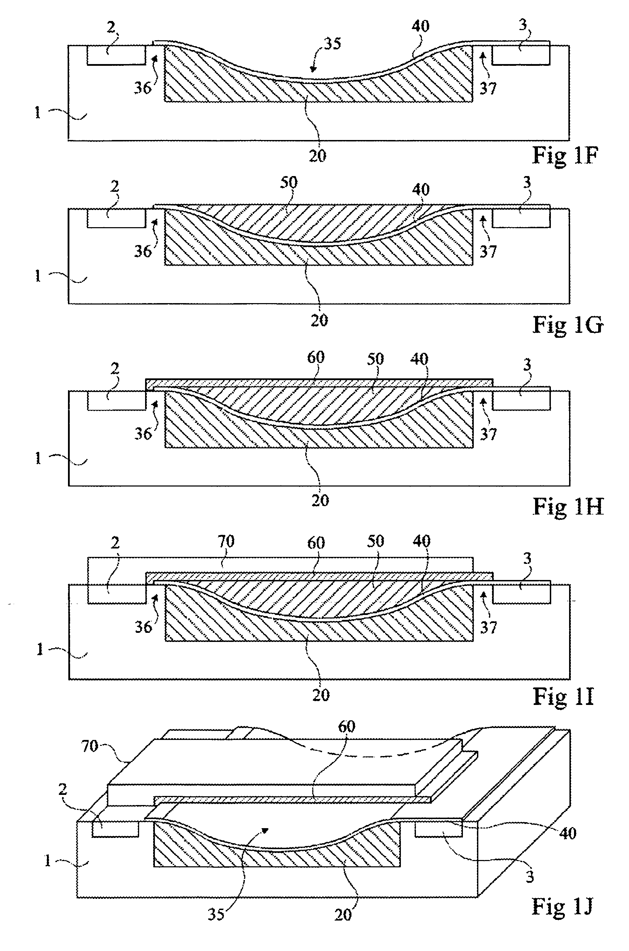

A l'étape suivante, illustrée en figure 1F, on effectue un dépôt conforme d'une couche conductrice sur la structure précédemment obtenue. On grave ensuite cette couche conductrice de façon à conserver une bande conductrice 40 recouvrant le sillon 35 et s'étendant sur les bords 36, 37 jusqu'à recouvrir une des pistes conductrices, la piste 3 dans cet exemple.

A l'étape suivante, illustrée en figure 1G, on dépose une couche sacrificielle sur la structure précédemment obtenue. On élimine ensuite les parties de la couche sacrificielle situées au-dessus du substrat 1, de la piste conductrice 2 et de la bande conductrice 40, à l'extérieur de la cavité préalablement formée. On obtient ainsi une portion sacrificielle 50 placée dans la cavité préalablement formée. Cette élimination partielle de la couche sacrificielle peut être effectuée par polissage mécanochimique de la couche sacrificielle jusqu'à découvrir le substrat 1, la bande conductrice 40 et la piste conductrice 2 ou selon un procédé de photo-litho-gravure de la couche sacrificielle.

A l'étape suivante, illustrée en figure 1H, on dépose une couche isolante sur la structure préalablement obtenue puis on la grave de façon à conserver une bande isolante 60 sur la portion sacrificielle 50. La bande isolante 60 est placée sensiblement au-dessus de la bande conductrice 40, transversalement au sillon 35 et s'étend sur les bords 36 et 37 du sillon 35. La bande isolante se prolonge au-dessus des bords 36 et 37. La bande isolante 60 ne doit pas recouvrir la piste conductrice 2 mais peut se prolonger au-dessus de la piste conductrice 3 sur la bande conductrice 40.

A l'étape suivante, illustrée en figure 1I, on dépose une couche conductrice au-dessus de la structure précédemment obtenue et on la grave de façon à conserver une bande conductrice 70 recouvrant la piste conductrice 2 ainsi que la bande isolante 60 jusqu'au bord 37 situé à proximité de l'autre piste conductrice 3.

Dans une dernière étape, illustrée en figure 1J, on élimine la portion sacrificielle 50 selon un procédé de gravure anisotrope. La bande conductrice 70 et la bande isolante 60 sont alors "libres" et peuvent se déformer. La bande conductrice 70 constitue alors une membrane souple conductrice. Les pistes conductrices 2 et 3 constituent des bornes d'application d'une tension entre la bande conductrice 40 et la membrane conductrice 70 qui constituent deux électrodes du condensateur variable ainsi formé. En fonction de la tension appliquée, la membrane conductrice 70 se rapproche ou s'éloigne de la bande conductrice 40 et la capacité du condensateur augmente ou diminue.

D'autres structures de condensateur variable peuvent être obtenues selon le procédé de la présente invention. Les bornes d'application d'une tension entre les électrodes du condensateur peuvent être réalisées différemment, par l'intermédiaire par exemple de contacts placés sur la membrane conductrice 70 et sur la bande conductrice 40. De plus, la bande isolante 60 peut être placée sur la bande conductrice 40 et non sous la membrane conductrice 70.

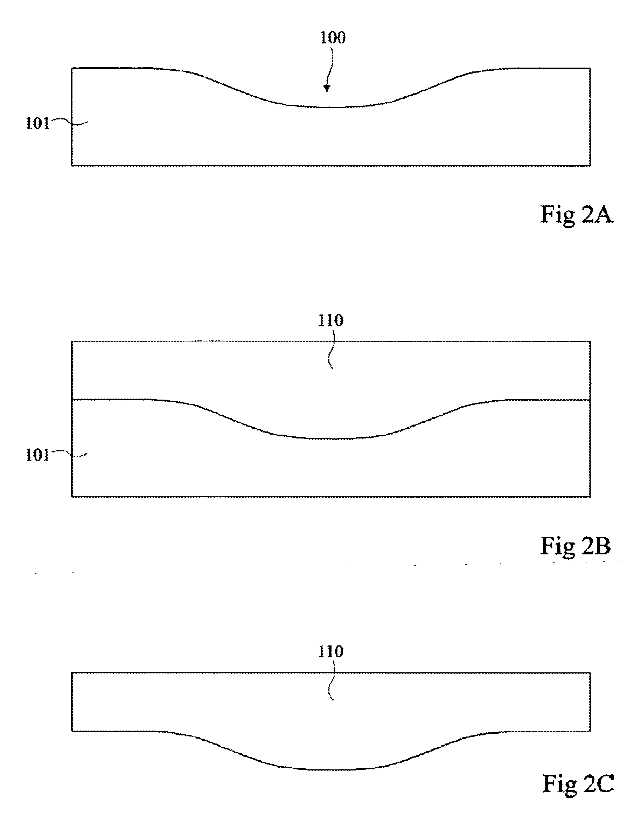

Le poinçon utilisé dans un procédé de fabrication selon la présente invention peut être obtenu selon le procédé suivant décrit en relation avec les figures 2A à 2C.

Dans une étape initiale, illustrée en figure 2A, on forme une cavité 100 dans la partie supérieure d'un substrat par exemple en silicium. La cavité 100 peut être formée selon un des procédés décrits dans la demande de brevet français susmentionnée.

A l'étape suivante, illustrée en figure 2B, on dépose un matériau 110 tel que du nickel pouvant se "durcir" une fois déposé et conserver ensuite sa forme lorsqu'il est placé dans une enceinte chauffée pour durcir le matériau malléable utilisé dans le procédé selon la présente invention.

Dans une étape finale, illustrée en figure 2C, on sépare le matériau 110 et le substrat 100. Le matériau 110 constitue alors un poinçon pouvant être utilisé pour former la cavité d'un condensateur variable fabriqué selon le procédé de la présente invention.

Bien entendu, la présente invention est susceptible de diverses variantes et modifications qui apparaîtront à l'homme de l'art. En particulier, l'homme de l'art pourra imaginer d'autres procédés de durcissement du matériau malléable.

De plus, plusieurs condensateurs variables peuvent être réalisés dans et au-dessus d'un même substrat selon le procédé de la présente invention. Ces condensateurs peuvent être de tailles et de formes différentes. Afin de former les cavités dans et au-dessus desquelles sont ensuite formés les condensateurs, on pourra utiliser une plaque "poinçon" comprenant un ensemble de poinçons identiques ou non, chaque poinçon correspondant à des excroissances bombées de la plaque.

## Revendications

1. Procédé de formation d'un condensateur variable comprenant une bande conductrice (40) recouvrant l'intérieur d'une cavité (35), et une membrane souple conductrice (70) placée au-dessus de la cavité, **caractérisé en ce que** la cavité est réalisée selon les étapes suivantes :
former un évidement (10) dans un substrat (1) ;
placer un matériau malléable (20) dans l'évidement ;
mettre un poinçon (30) en appui sur le substrat au niveau de l'évidement afin de conférer à la partie supérieure du matériau malléable une forme désirée ;
durcir le matériau malléable ; et
retirer le poinçon.

2. Procédé de formation d'un condensateur variable selon la revendication 1, dans lequel l'étape de durcissement comprend une étape de chauffage.

3. Procédé de formation d'un condensateur variable selon la revendication 1, dans lequel le matériau malléable (20) est de la résine non réticulée.

4. Procédé de formation d'un condensateur variable selon la revendication 1, dans lequel le poinçon (30) est obtenu selon le procédé suivant :
former une cavité (100) de forme désirée dans la partie supérieure d'un substrat (101) ;
déposer sur le substrat un matériau durcissable (110) ; et
séparer le substrat et le matériau durcissable, ce dernier constituant alors un poinçon.

5. Procédé de formation d'un condensateur variable selon la revendication 1, dans lequel une partie au moins de la cavité a la forme d'un sillon (35), les parties supérieures de substrat situées à proximité du sillon constituant deux bords (36, 37), et la profondeur du sillon augmentant continûment en allant d'un des bords vers le centre du sillon.

6. Procédé de formation d'un condensateur variable selon la revendication 5, comprenant en outre les étapes suivantes :
former une première bande conductrice (40) recouvrant l'intérieur de la partie de la cavité en forme de sillon, la première bande conductrice s'étendant au moins jusqu'à l'un des deux bords du sillon (36, 37) qu'elle recouvre éventuellement ;
former une portion sacrificielle (50) dans la cavité ;
former une bande isolante (60) sur la portion sacrificielle, sensiblement au-dessus de la première bande conductrice ;
former une seconde bande conductrice (70) sur la bande isolante ; et
éliminer la portion sacrificielle.

7. Procédé de formation d'un condensateur variable selon la revendication 6, comprenant en outre, préalablement à la formation de la cavité, la formation de deux pistes conductrices (2, 3) dans la partie supérieure du substrat (1), ledit évidement (10) étant placé entre les deux pistes conductrices, et dans lequel la première bande conductrice (40) s'étend sur le substrat jusqu'à recouvrir l'une des pistes conductrices, et la seconde bande conductrice (70) s'étend sur le substrat au-delà de la bande isolante jusqu'à recouvrir l'autre des pistes conductrices.

## Claims

1. A method for forming a variable capacitor comprising a conductive strip (40) covering the inside of a cavity (35), and a flexible conductive membrane (70) placed above the cavity, **characterized in that** the formation of the cavity comprises the following steps:
forming a recess (10) in a substrate (1);
placing a malleable material (20) in the recess;
having a stamp (30) bear against the substrate at the recess level to give the upper part of the malleable material a desired shape;
hardening the malleable material; and
removing the stamp.

2. The method for forming a variable capacitor of claim 1, wherein the hardening step comprises a heating step.

3. The method for forming a variable capacitor of claim 1, wherein the malleable material (20) is non-reticulated resin.

4. The method for forming a variable capacitor of claim 1, wherein the formation of the stamp (30) comprises:
forming a cavity (100) of a desired shape in the upper portion of a substrate (101);
depositing on the substrate a hardenable material (110); and
separating the substrate and the hardenable material, the latter then forming a stamp.

5. The method for forming a variable capacitor of claim 1, wherein a portion at least of the cavity has the shape of a groove (35), the upper substrate portions located close to the groove forming two edges (36, 37), and the groove depth continuously increasing from one of the edges to the groove center.

6. The method for forming a variable capacitor of claim 5, further comprising the steps of:
forming a first conductive strip (40) covering the inside of the groove-shaped portion of the cavity, the first conductive strip extending at least up to one of the two edges of the groove (36, 37) that it may cover;
forming a sacrificial portion (50) in the cavity;
forming an insulating strip (60) on the sacrificial portion, substantially above the first conductive strip;
forming a second conductive strip (70) on the insulating layer; and
eliminating the sacrificial portion.

7. The method for forming a variable capacitor of claim 6, further comprising, prior to forming the cavity, forming two conductive tracks (2, 3) in the upper portion of the substrate (1), said recess (10) being placed between the two conductive tracks, and wherein the first conductive strip (40) extends on the substrate to cover one of the conductive tracks, and the second conductive strip (70) extends on the substrate beyond the insulating strip to cover the other one of the conductive tracks.

## Patentansprüche

1. Verfahren zum Bilden eines variablen Kondensators, aufweisend einen leitfähigen Streifen (40), der die Innenseite einer Kavität (35) bedeckt, und eine flexible leitfähige Membran (70), die oberhalb der Kavität angeordnet ist, **dadurch gekennzeichnet, dass** die Bildung der Kavität die folgenden Schritte aufweist:
Bilden einer Aussparung (10) in einem Substrat (1);
Anordnen eines verformbaren Materials (20) in der Aussparung;
Aufdrücken eines Stempels (30) gegen das Substrat auf der Aussparungsebene, um dem oberen Teil des verformbaren Materials eine gewünschte Form zu geben;
Härten des verformbaren Materials; und
Entfernen des Stempels.

2. Verfahren zum Bilden eines variablen Kondensators nach Anspruch 1, bei dem der Härtungsschritt einen Erwärmungsschritt aufweist.

3. Verfahren zum Bilden eines variablen Kondensators nach Anspruch 1, bei dem das verformbare Material (20) ein nicht-retikuläres Harz ist.

4. Verfahren zum Bilden eines variablen Kondensators nach Anspruch 1, bei dem die Bildung des Stempels (30) aufweist:
Bilden einer Kavität (100) einer gewünschten Form im oberen Teil eines Substrats (101);
Abscheiden eines härtbaren Materials (110) auf dem Substrat; und Trennen des Substrats und des härtbaren Materials, wobei das letztere dann einen Stempel bildet.

5. Verfahren zum Bilden eines variablen Kondensators nach Anspruch 1, bei dem ein Teil zumindest der Kavität die Form einer Nut (35) aufweist, wobei die oberen Substratteile, die sich nahe zur Nut befinden, zwei Kanten (36, 37) bilden, und die Nuttiefe sich von einem der Ränder zur Nutmitte kontinuierlich vergrößert.

6. Verfahren zum Bilden eines variablen Kondensators nach Anspruch 5, ferner aufweisend die folgenden Schritte:
Bilden eines ersten leitfähigen Streifens (40), der die Innenseite des nutförmigen Teils der Kavität bedeckt, wobei sich der erste leitfähige Streifen zumindest bis zu einem der zwei Ränder der Nut (36, 37) erstreckt, die er bedecken mag;
Bilden eines Opferteils (50) in der Kavität;
Bilden eines isolierenden Streifens (60) auf dem Opferteil im Wesentlichen oberhalb des ersten leitfähigen Streifens;
Bilden eines zweiten leitfähigen Streifens (70) auf der isolierenden Schicht; und
Entfernen des Opferteils.

7. Verfahren zum Bilden eines variablen Kondensators nach Anspruch 6, ferner aufweisend, vor dem Bilden der Kavität, ein Bilden von zwei leitfähigen Spuren (2, 3) im oberen Teil des Substrats (1), wobei die Aussparung (10) zwischen den zwei leitfähigen Spuren angeordnet ist und wobei sich der erste leitfähige Streifen (40) auf dem Substrat erstreckt, um eine der leitfähigen Spuren zu bedecken, und sich der zweite leitfähige Streifen (70) auf dem Substrat über den isolierenden Streifen hinaus erstreckt, um die andere der leitfähigen Spuren zu bedecken.
